Europäisches Patentamt

European Patent Office

Office européen des brevets

(11) Publication number: **0 052 449**
**B1**

# (12) EUROPEAN PATENT SPECIFICATION

(45) Date of publication of patent specification: **21.05.86**

(51) Int. Cl.⁴: **C 08 F 236/10, C 09 J 3/12**

(21) Application number: **81305115.8**

(22) Date of filing: **28.10.81**

(54) Adhesive compositions.

(30) Priority: **14.11.80 US 206784**

(43) Date of publication of application:
**26.05.82 Bulletin 82/21**

(45) Publication of the grant of the patent:
**21.05.86 Bulletin 86/21**

(84) Designated Contracting States:
**BE DE FR GB IT NL**

(56) References cited:
**DD-A- 129 924**
**FR-A-1 392 382**
**US-A-4 189 419**

(73) Proprietor: **POLYSAR INTERNATIONAL S.A.**
**P.O. Box 1063 Route de Beaumont 10**
**CH-1071 Fribourg (CH)**

(72) Inventor: **Barabas, Eugene S.**
**41 Stanie Brae Drive**
**Watchung New Jersey, 07060 (US)**
Inventor: **Mallya, Prakash**
**160 George Street Apt. 501**
**Sarnia Ontario, N7D 7V4 (CA)**
Inventor: **Gromelski, Stanley J.**
**39 Eastern Parkway**
**W. Caldwell New Jersey 07006 (US)**
Inventor: **Wotier, Edward J. c/o Nat. Starch and**
**Chem. Corp.**
**C.S. Tanner Co. Division P.O. Box 16149**
**Greenville, S.C. 29606 (US)**

(74) Representative: **Perry, Robert Edward et al**
**GILL JENNINGS & EVERY 53-64 Chancery Lane**
**London WC2A 1HN (GB)**

The file contains technical information
submitted after the application was filed and
not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The invention relates to single component pressure-sensitive adhesive compositions based on styrene-butadiene containing polymers, and to products coated therewith.

One major drawback of pressure-sensitive adhesive compositions based on styrene-butadiene containing polymers has been their poor adhesive strength upon application of pressure. The inability of these adhesives to readily flow and form a strong bond between materials during the short times for which pressure is applied limits the applications for which these adhesives can be employed. In particular, it was found that applications which require good adhesive strength and insensitivity to water, and yet require the adhesive to form a flexible bond, were foreclosed due to the inherent properties of the styrene-butadiene containing polymers available.

Illustrative of the prior art are the following U.S. Patents 3,535,153, 3,407,164, 4,102,835, 4,146,514 and 4,148,771. In these patents, it is pointed out that pressure-sensitive adhesives require a proper balance of the properties of tack, adhesive strength and cohesive strength. In order to improve this balance, styrene-butadiene-containing polymers in latex form have been compounded with emulsified tackifier resins. For example, U.S. Patent 4,189,419 teaches a pressure-sensitive adhesive composition comprising a tackifier and a carboxylated styrene-butadiene polymer. However, tackifier resins often are not compatible with the polymer, which condition leads to non-uniformity in bond strength of the adhesive. Furthermore, the combination of the emulsified tackifiers and latex may become unstable with time, and the adhesive may become ineffective at the temperatures at which the adhesive normally is used.

Accordingly, there is a need for a pressure-sensitive adhesive where a strong yet flexible bond is desired as, for example, in bonding textiles in producing, say, disposable hospital bed-sheets. Such an adhesive also should be resistant to water and be capable of maintaining its adhesive and other physical properties for extended periods of time. Owing to the heat-sensitive nature of the substrates typically employed for these applications, the adhesive bonding should preferably be brought about at room temperatures.

DD—A—129924 discloses a polymer derived from styrene, butadiene, α-methylstyrene and a copolymerisable carboxylic acid. In particular, Example 1 of DD—A—129924 discloses the polymerisation of 60.25 parts styrene, 44.2 parts butadiene, 2.05 parts α-methylstyrene, 3 parts acrylic acid and 0.5 parts fumaric acid in the presence of 0.5 parts dodecyl mercaptan (all parts by weight).

A product according to the present invention is of the random emulsion polymerisation of a mixture of monomers comprising styrene, butadiene, α-methylstyrene and a copolymerisable carboxylic acid, in the presence of from 1.35 to 1.55 parts by weight of *tert*-dodecyl mercaptan per 100 parts by weight of the monomer mixture.

The monomer mixture preferably consists of styrene, butadiene and relatively minor amounts of α-methylstyrene and copolymerisable carboxylic acid. More preferably, the monomer mixture comprises, per 100 parts by weight thereof, styrene and butadiene in respective amounts of 20 to 58.9 and 40 to 78.9, and most preferably 35 to 55 and 43.9 to 63.9, parts by weight.

The monomer mixture preferably comprises, per 100 parts by weight thereof, from 1 to 5, and more preferably from 2 to 3, parts by weight α-methylstyrene. The copolymerisable carboxylic acid is preferably itaconic and/or methacrylic acid; there are preferably from 0.1 to 5 parts by weights of itaconic and/or methacrylic acid per 100 parts by weight of the mixture of monomers.

The products of the invention are pressure-sensitive adhesive compositions which can be considered as "single" component systems in that their excellent combination of properties is obtained without an added tackifier component. The peel strength properties, particularly, are comparable to the more expensive acrylic latices currently being used for the same application.

As a feature of the invention, a novel and useful pressure-sensitive adhesive product is provided which comprises a backing material having the aforementioned adhesive composition coated thereon. These products exhibit a 90° peel strength of from about 2.5 to about 3.2 kN/m, when coated on a cotton backing and measured in an Instron machine at a cross-head speed of 5 cm/minute.

Preparation of the emulsion polymerization product itself is effected in accordance with prior art procedures, e.g. the process described in Bovey et al. *Emulsion Polymerization*, 1955, Interscience Publishers, Inc., New York, P. 325. This book is incorporated by reference herein for its disclosure of typical processing conditions for the preparation of styrene-butadiene containing polymers. The compositions of the present invention differ from the teachings of this reference, however, in two important ways, first by the inclusion of the alpha-methyl styrene monomer constituent, within the range stated, and secondly by the inclusion of the stated range of tertiary dodecyl mercaptan, both of which improve the ability of the resulting compositions to flow at ambient temperatures under pressure, and both of which also improve the peel strength of the compositions making them specially adaptable for use as pressure-sensitive adhesives for fibrous materials, paper, wood, metal and plastics.

The critical presence of the alpha-methyl styrene in providing a significant improvement in the peel strength and pressure-flow properties of pressure-sensitive adhesives is surprising and unexpected. While the amount of alpha-methyl styrene in the composition may vary, it is preferred to include from about 1 to about 5, more preferably from about 2 to about 3, parts by weight in the monomer mixture.

For many pressure-sensitive adhesive applications, which are intended to be utilized under ambient

2

**0 052 449**

temperature conditions, it has been found that levels of styrene of from about 20 to about 58.9 parts by weight, and levels of butadiene of from about 40 to about 78.9 parts by weight are preferred. Having styrene present above this preferred range will result in a less-flowing adhesive composition whereas having styrene present below this range will result in a composition having low peel strength. More preferably, styrene will be present in an amount of from about 35 to about 55 parts, and butadiene will be present in an amount of from about 43.9 to about 63.9 parts. In general, by varing the ratio of butadiene and styrene within these preferred ranges, pressure-sensitive adhesive compositions having different peel strengths, suitable for a variety of applications, are achieved.

The polymerization mixture includes one or more copolymerizable carboxylic acids, in an amount which suitably ranges from about 0.1 to about 5 parts by weight, preferably from about 2 to about 3 parts by weight, of the monomer mixture. While any of the copolymerizable carboxylic acids known to the art for improving the adhesive and cohesive strength of styrene-butadiene containing polymers can be employed, it is preferred to employ itaconic or methacrylic acids or a mixture of both.

To effect the desired random emulsion polymerization, it is necessary to include a chain transfer agent in the reaction mixture. Preferably, tertiary dodecyl mercaptan is used for this purpose. In the best mode, it is present in an amount of from about 1.35 to about 1.55 parts by weight per 100 parts by weight of the monomer mixture.

As mentioned, the pressure-sensitive adhesive composition of the invention may be characterized as being a single component composition wherein the polymerization product itself functions as the adhesive. However, if desired, other ingredients may be added to the adhesive composition. For example, to improve the stability of the resulting compositions against degradation, additives known in the art for controlling various types of degradation e.g. UV stabilizers, antioxidants, etc., can be included in the final adhesive composition as desired.

The following examples are presented for the purpose of further illustrating and explaining the present invention and are not to be taken as limiting in any regard.

Example 1—Test procedure

A 0.1 mm Mylar film (18 cm×18 cm) is coated uniformly with a 0.025 mm layer of Elmer's Glue and a cotton strip (18 cm×18 cm) is placed on it immediately. The coated-cotton strip then is air-dried for 24 hours and then coated with the adhesive composition (1 mm draw-down bar), air dried for 20—24 hours at 24.4+1.1°C and 50+3% relative humidity, pressed in a Carver press with another cotton strip on top of the adhesive at room temperature at from 6.9 to 124 MPa in increments of 6.9 MPa, holding the strip at each increment for 5 seconds, and finally for 15 seconds at 124 MPa. Strips of 2.5 cm width are cut from the samples thus prepared and tested on an Instron for delamination (on the same day) at a cross-head speed of 5 cm/minute and a chart speed of 5 cm/minute on the 9 kg load scale.

In preparing the pressure-sensitive adhesive products according to the invention, it will be understood that while any suitable backing material may be used, it is preferred to use fibrous material, e.g. cotton, rayon, paper, non-woven fabrics, polyester, and other plastics etc. Also the test may be carried out on the above backing materials without gluing them onto Mylar film.

Example 2

This example describes the preparation of an improved random emulsion polymerization product according to the present invention, prepared from styrene, butadiene, alpha-methyl styrene, itaconic acid, methacrylic acid and tertiary dodecyl mercaptan. Accordingly, a reaction mixture is prepared by sequentially charging the materials shown in Table 1 into a 4.5 litre high pressure kettle equipped with a mechanical stirrer, thermometer, pressure gauge and three charging inlets.

**0 052 449**

TABLE 1

| Number | Ingredient | Amount (g) |
|---|---|---|
| 1 | Water-distilled | 935.1 |
| 2 | Kemplex—100 | 2.2 |
| 3 | Itaconic acid | 18.0 |
| 4 | MB-45 (Monawet MB-45—surfactant-diisobutyl sodium succinate) | 5.33 |
| 5 | Seed latex (800-43-CS, a small particle size carboxylated styrene-butadiene latex from GAF with 42% solids) | 57.1 |
| 6 | Water-distilled | 50.0 |
| 7 | Ammonium persulfate | 2.4 |
| 8 | Water-distilled | 200.0 |
| 9 | Sodium hydroxide (20%) | 18.0 |
| 10 | Ammonium persulfate | 3.6 |
| 11 | MB-45 | 21.3 |
| 12 | Styrene | 576.0 |
| 13 | Butadiene | 573.6 |
| 14 | Methacrylic acid | 8.4 |
| 15 | Tertiary-dodecyl mercaptan | 17.4 |
| 16 | Alpha-methyl styrene | 24.0 |

Specifically, ingredient Numbers 1 through 5 are charged at room temperature into a 4.5 litre pressure reactor, alternately evacuated and repressurized with nitrogen three times while agitating at 300 rpm. Then the temperature of the contents is raised to 82°C, and a solution of number 7 in number 6 is added. Then numbers 8 through 11 and numbers 12 through 16 are added separately and continuously to the reactor during a period of 4 hours. After the addition has been completed, the temperature is increased to 88°C and the contents are held at this temperature for 2 hours. Fifteen minutes before the end of this period, 4.8 g of 70% t-butyl hydroperoxide in 5 g isopropyl alcohol and 10 g distilled water are added followed by the addition of 1 g of the antioxidant erythorbic acid in 10 g distilled water. The reaction mass is then cooled and discharged.

The properties of the resultant polymerization product are given in Table 2 below, which data includes the 90° peel strength, measured under test conditions stated in Example 1 for a pressure-sensitive adhesive product comprising a cotton backing which is coated with the adhesive composition.

TABLE 2

| | |
|---|---|
| % Solids | 49.25% |
| pH | 4.85 |
| Particle diameter (Dn) | 1770 A |
| Surface tension | 51.9 dynes/cm |
| Brookfield viscosity #3 at 30 rpm | 50.0 cps |
| 90° peel strength | 2.8—3.0 kN/m |
| Tg (by TMA-penetration) | −15°C |

4

Example 3
This example describes the preparation of an emulsion polymerization product having the same composition as in Example 2, but made in the absence of the surface active agent ingredients numbers 4 and 11.

The resulting polymer is less sensitive to moisture than that of Example 2.

TABLE 3

| Number | Ingredient | Amount (g) |
|---|---|---|
| 1 | Distilled water | 935.1 |
| 2 | Kemplex-100 | 2.2 |
| 3 | Itaconic acid | 18.0 |
| 4 | Seed latex (GAF 800-43-CS) 42% solids | 57.1 |
| 5 | Distilled water | 50.1 |
| 6 | Ammonium persulfate | 2.4 |
| 7 | Distilled water | 200.0 |
| 8 | Sodium hydroxide (20% solution) | 18.0 |
| 9 | Ammonium persulfate | 3.6 |
| 10 | Styrene | 576.0 |
| 11 | Butadiene | 573.6 |
| 12 | Methacrylic acid | 8.4 |
| 13 | Tertiary dodecyl mercaptan | 17.4 |
| 14 | Alpha-methyl styrene | 24.0 |

Ingredient numbers 1 through 4 are charged at room temperature into a 4.5 litre pressure reactor, alternately evacuated and repressurized with nitrogen three times while agitating at 300 rpm. Then the temperature of the contents is raised to 82°C, and a solution of number 6 in 5 is added. Then numbers 7 through 9 and numbers 10 through 14 are added separately and continuously to the reactor during a period of 4 hours. After the addition has been completed, the temperature is increased to 88°C and the contents are held at this temperature for 2 hours. Fifteen minutes before the end of this period, 4.8 g of 70% t-butyl hydroperoxide in 5 g isopropanol and 10 g distilled water are added followed by the addition of 1 g erythorbic acid in 10 g distilled water. The reaction mass is then cooled and discharged.

The properties of the resultant polymerization product are given in Table 4 below, which data includes the 90° peel strength measured under test conditions stated in Example 1 and using the same backing as in Example 2.

TABLE 4

| | |
|---|---|
| % Solids | 49.03% |
| pH | 4.2 |
| Surface tension | 63.2 dynes/cm |
| 90° peel strength | 2.8 kN/m |
| Brookfield viscosity (#3 at 30 rpm) | 50 cps |

Example 4
The same ingredients and procedure as in Example 2 are followed, the only difference being ingredient number 1 wherein 735.1 g are charged instead of 935.1 g. This change provides a latex having a higher solids content, and, when tested according to Example 1, gives 90° peel strengths which are slightly higher. The properties of this polymerization product are given in Table 5.

TABLE 5

| | |
|---|---|
| % Solids | 53.10% |
| pH | 4.30 |
| Surface tension | 58.1 dynes/cm |
| 90° peel strength | 3.0—3.2 kN/m |
| Brookfield viscosity (#3 at 30 rpm) | 50 cps |

Example 5

This example describes the preparation of a polymerization product by the same procedure and having the same components as in Example 2. The amounts of three of the ingredients of Example 2 are varied and listed below, the numbers corresponding to the numbers of the ingredients in Example 2.

| | | |
|---|---|---|
| 1. | Distilled water | 735.1 g |
| 12. | Styrene | 552.0 g |
| 16. | Alpha-methyl styrene | 48.0 g |

The properties of the resulting polymerization product are listed below in Table 6.

TABLE 6

| | |
|---|---|
| % Solids | 52.5% |
| pH | 4.4 |
| Surface tension | 55.9 dynes/cm |
| Brookfield viscosity (#3 at 30 rpm) | 50 cps |
| 90° peel strength | 2.5 kN/m |

**Claims**

1. The random emulsion polymerisation product of a mixture of monomers in the presence of a dodecyl mercaptan, in which the monomers comprise styrene, butadiene, α-methylstyrene and a copolymerisable carboxylic acid, characterised in that the mercaptan is *tert*-dodecyl mercaptan which is present in an amount of from 1.35 to 1.55 parts by weight per 100 parts by weight of the monomer mixture.

2. A polymerisation product according to claim 1, wherein the monomer mixture consists of styrene, butadiene and relatively minor amounts of α-methylstyrene and copolymerisable carboxylic acid.

3. A polymerisation product according to claim 1 or claim 2, wherein the monomer mixture comprises, per 100 parts by weight thereof, from 20 to 58.9 parts by weight styrene and from 40 to 78.9 parts by weight butadiene.

4. A polymerisation product according to claim 3, wherein the monomer mixture comprises, per 100 parts by weight thereof, from 35 to 55 parts by weight styrene and from 43.9 to 63.9 parts by weight butadiene.

5. A polymerisation product according to any preceding claim, wherein the monomer mixture comprises, per 100 parts by weight thereof, from 1 to 5 parts by weight α-methylstyrene.

6. A polymerisation product according to claim 5, wherein the monomer mixture comprises, per 100 parts by weight thereof, from 2 to 3 parts by weight α-methylstyrene.

7. A polymerisation product according to any preceding claim, wherein the copolymerisable carboxylic acid is itaconic and/or methacrylic acid.

8. A polymerisation product according to claim 7, which comprises from 0.1 to 5 parts by weight of itaconic and/or methacrylic acid per 100 parts by weight of the monomer mixture.

9. A pressure-sensitive adhesive product which comprises a backing carrying a coating of a polymerisation product according to any preceding claim.

10. An adhesive product according to claim 9, wherein the backing is a fibrous or plastic(s) material.

11. An adhesive product according to claim 10, wherein the backing is cotton or polyester.

12. An adhesive product according to any of claims 9 to 11, which exhibits a 90° peel strength of from about 2.5 to about 3.2 kN/m at a cross-head speed of 5 cm/min.

**Patentansprüche**

1. Emulsionspolymerisationsprodukt mit willkürlicher Verteilung aus einer Mischung von Monomeren in Gegenwart eines Dodezylmerkaptans, wobei die Monomeren Styrol, Butadien, α-Methylstyrol und eine copolymerisierbare Karbonsäure umfassen, dadurch gekennzeichnet, daß das Merkaptan aus tert.-Dodezylmerkapten besteht, das in einer Menge von 1,35 bis 1,55 Gewichtsteilen pro 100 Gewichtsteile der Monomermischung vorliegt.

2. Polymerisationsprodukt nach Anspruch 1, dadurch gekennzeichnet, daß die Monomermischung aus Styrol, Butadien und relativ kleinen Mengen α-Methylstyrol und einer copolymerisierbaren Karbonsäure besteht.

3. Polymerisationsprodukt nach Anspruch 1 oder 2, dadurch gekennzeichnet, daß die Monomermischung pro 100 Gewichtsteile 20 bis 58,9 Gewichtsteile Styrol und 40 bis 78,9 Gewichtsteile Butadien aufweist.

4. Polymerisationsprodukt nach Anspruch 3, dadurch gekennzeichnet, daß die Monomermischung pro 100 Gewichtsteile 35 bis 55 Gewichtsteile Styrol und 43,9 bis 63,9 Gewichtsteile Butadien aufweist.

5. Polymerisationsprodukt nach einem der vorhergehenden Ansprüche, dadurch gekennzeichnet, daß die Monomermischung pro 100 Gewichtsteile 1 bis 5 Gewichtsteile α-Methylstyrol aufweist.

6. Polymerisationsprodukt nach Anspruch 5, dadurch gekennzeichnet, daß die Monomermischung pro 100 Gewichtsteile 2 bis 3 Gewichtsteile α-Methylstyrol aufweist.

7. Polymerisationsprodukt nach einem der vorhergehenden Ansprüche, dadurch gekennzeichnet, daß die copolymerisierbare Karbonsäure aus Itakonsäure und/oder Methacrylsäure besteht.

8. Polymerisationsprodukt nach Anspruch 7, dadurch gekennzeichnet, daß sie 0,1 bis 5 Gewichtsteile Itakonsäure und/oder Methacrylsäure pro 100 Gewichtsteile der Monomermischung aufweist.

9. Druckempfindliches Klebeprodukt aus einer Unterlage, die einen Überzug aus einem Polymerisationsprodukt gemäß einem der vorhergehenden Ansprüche trägt.

10. Klebeprodukt nach Anspruch 9, dadurch gekennzeichnet, daß die Unterlage aus einem oder mehreren faserartigen oder einem oder mehreren Kunststoffmaterial(ien) besteht.

11. Klebeprodukt nach Anspruch 10, dadurch gekennzeichnet, daß die Unterlage aus Baumwolle oder Polyester besteht.

12. Klebeprodukt nach einem der Ansprüche 9 bis 11 mit einer 90°-Abschälfestigkeit von ungefähr 2,5 bis ungefähr 3,2 kN/m bei einer Querkopfgeschwindigkeit von 5 cm/min.

**Revendications**

1. Produit de polymérisation statistique en émulsion d'un mélange de monomères en présence d'un dodécylmercaptan, dans lequel les monomères comprennent du styrène, du butadiène, de l'α-méthylstyrène et un acide carboxylique copolymérisable, caractérisé en ce que le mercaptan est le tertio-dodécylmercaptan qui est présent en une quantité de 1,35 à 1,55 partie en poids pour 100 parties en poids du mélange de monomères.

2. Produit de polymérisation suivant la revendication 1, dans lequel le mélange de monomères est formé de styrène, de butadiène et de quantités relativement faibles d'α-méthylstyrène et d'acide carboxylique copolymérisable.

3. Produit de polymérisation suivant la revendication 1 ou la revendication 2, dans lequel le mélange de monomères comprend, pour 100 parties de son poids, 20 à 58,9 parties en poids de styrène et 40 à 78,9 parties en poids de butadiène.

4. Produit de polymérisation suivant la revendication 3, dans lequel le mélange de monomères comprend, pour 100 parties de son poids, 35 à 55 parties en poids de styrène et 43,9 à 64,9 parties en poids de butadiène.

5. Produit de polymérisation suivant l'une quelconque des revendications précédentes, dans lequel le mélange de monomères comprend, pour 100 parties de son poids, 1 à 5 parties en poids d'α-méthylstyrène.

6. Produit de polymérisation suivant la revendication 5, dans lequel le mélange de monomères comprend, pour 100 parties de son poinds, 2 à 3 parties en poids d'α-méthylstyrène.

7. Produit de polymérisation suivant l'une quelconque des revendications précédentes, dans lequel l'acide carboxylique copolymérisable est l'acide itaconique et/ou l'acide méthacrylique.

8. Produit de polymérisation suivant la revendication 7, qui comprend 0,1 à 5 parties en poids d'acide itaconique et/ou d'acide méthacrylique pour 100 parties en poids du mélange de monomères.

9. Produit adhésif sensible à la pression, qui comprend un support portant une couche d'un produit de polymérisation suivant l'une quelconque des revendications précédentes.

10. Produit adhésif suivant la revendication 9, dans lequel le support est une matière fibreuse ou une matière plastique.

11. Produit adhésif suivant la revendication 10, dans lequel le support est en coton ou en polyester.

12. Produit adhésif suivant l'une quelconque des revendications 9 à 11, qui présente une résistance au décollement à 90° d'environ 2,5 à environ 3,2 kN/m pour une vitesse de l'organe mobile de 5 cm/min.